# EUROPÄISCHE PATENTSCHRIFT

(11) **EP 0 408 539 B1**
(45) Veröffentlichungstag und Bekanntmachung des Hinweises auf die Patenterteilung: **13.10.1993**
(21) Anmeldenummer: 90890202.6
(22) Anmeldetag: 05.07.1990
(51) Int. Cl.: C08G 73/10, C08G 18/22, C08G 18/34

(54) **Verfahren zur Herstellung von Polyimiden**
A process for the preparation of polyimides
Procédé pour la préparation de polyimides

(30) Priorität: 10.07.1989 AT 1665/89
(43) Veröffentlichungstag der Anmeldung: 16.01.1991
(73) Patentinhaber: Lenzing Aktiengesellschaft, A-4860 Lenzing (AT)
(72) Erfinder: Seidl, Sigrid, Dr., A-4863 Seewalchen (AT); Weinrotter, Klaus, Dr., AT-4840 Vöcklabruck (AT); Simharl, Reinhold, AT-4860 Lenzing (AT)
(74) Vertreter: Schwarz, Albin, Dr. Kopecky & Schwarz Patentanwälte

(56) Entgegenhaltungen:
- US-A- 3 701 756
- US-A- 4 001 186
- US-A- 4 021 412
- US-A- 4 177 333
- CHEMICAL ABSTRACTS, Band 83, Nr. 6, 11. August 1975, Seite 29, Zusammenfassung Nr. 44176e, Columbus, Ohio, US; & JP-A-74 48 196 (SHOWA ELECTRIC WIRE AND CABLE CO., LTD) 19-12-1974

## Beschreibung

Die Erfindung betrifft ein Verfahren zur Herstellung von Polyimiden durch Erhitzen einer Lösung von intramolekularen Tetracarbonsäuredianhydriden und organischen Diisocyanaten in einem aprotischen organischen Lösungsmittel in Gegenwart eines Polymerisationsbeschleunigers.

Es ist bekannt, daß Carbonsäuredianhydride und Diisocyanate zu Polyimiden kondensieren, wenn sie in polaren organischen Lösungsmitteln zwischen 6 und 24 Stunden auf Temperaturen von mindestens 100°C erhitzt werden. Unter diesen Reaktionsbedingungen leidet aber die Selektivität der Polykondensation, weil die Isocyanate auch mit Lösungsmittelmolekülen reagieren. Diese unerwünschten Nebenreaktionen verhindern weiters das Erreichen hoher Molekulargewichte und erschweren die Abtrennung von Nebenprodukten, wodurch das gebildete Polymer verunreinigt wird.

Es hat deshalb nicht an Versuchen gefehlt, die Reaktionsgeschwindigkeit mit Polymerisationsbeschleunigern zu erhöhen.

In der US-A - 4,021,412 wird beispielsweise beschrieben, daß Alkalimetallactamate die Bildung mancher Mischpolyimide katalysieren. Als Diisocyanatkomponenten werden 4,4'-Methylen-bis-(phenylisocyanat) (MDI) und Toluylendiisocyanat (TDI) genannt.

Der US-A - 4,156,065 ist zu entnehmen, daß gewisse vier- oder fünfgliedrige, zyklische Phosphorverbindungen ebenfalls eine katalytische Wirkung auf die Bildung der MDI/TDI-Mischpolyimide ausüben. Allerdings werden Polymerisate erhalten, die neben den Imideinheiten auch eine beträchtliche Anzahl Carbodiimideinheiten enthalten. Das wirkt sich nachteilig auf die Thermostabilität der Polyimide aus.

Nach der US-A - 3,701,756 kann Benzophenontetracarbonsäuredianhydrid (BTDA) und MDI zu einem Homopolyimid kondensiert werden, wobei als Katalysator u.a. das äußerst giftige Phenylquecksilberhydroxid und tert. Alkohole genannt werden. Die Katalysatoren bleiben teilweise im Polymer eingeschlossen.

Aus der US-A-4,001,186 ist bekannt, daß Alkalimetallalkoholate die Reaktion von BTDA mit MDI und Toluylendiisocyanaten katalysieren. Für die Umsetzung genügt eine Reaktionstemperatur von 80°C. Als Reaktionsmedium wird trockenes Dimethylformamid (DMF) verwendet. Allerdings werden auch hier Polymere mit einer unbefriedigenden Thermostabilität erhalten, da das Alkoholation mit den Diisocyanaten zu Polyurethanen reagiert, die in die Polyimidkette eingebaut werden. Außerdem müssen die Diisocyanate in einem mindestens 1 Mol-%igen Überschuß eingesetzt werden, um hohe Ausbeuten zu erreichen. Dieser Überschuß verkleinert aber andererseits den Polymerisationsgrad und damit das Molekulargewicht des Polymeren.

Bei allen heute bekannten Verfahren zur großtechnischen Herstellung von Polyimiden muß dieser Mindestüberschuß an Diisocyanat in der Reaktionsmischung vorhanden sein.

Die Erfindung bezweckt die Vermeidung aller dieser Nachteile und setzt sich insbesondere zum Ziel, ein Verfahren der eingangs beschriebenen Art zur Verfügung zu stellen, das mit einem billigen und einfach zugänglichen Polymerisationsbeschleuniger durchgeführt werden kann, der nicht in die Polymerkette eingebaut wird. Außerdem soll das erfindungsgemäße Verfahren die Herstellung von Polyimiden mit einem höheren Molekulargewicht und damit einer verbesserten Thermostabilität erlauben.

Dieses Ziel wird erfindungsgemäß dadurch gelöst, daß als Polymerisationsbeschleuniger ein Alkalimetallhydroxid in einer Menge zwischen 0,0001 und 0,2 Mol pro Mol Diisocyanat eingesetzt wird.

Als intramolekulare Tetracarbonsäuredianhydride eignen sich insbesondere Pyromellithsäuredianhydrid, Benzol-1,2,3,4-tetracarbonsäuredianhydrid, Diphenyltetracarbonsäuredianhydrid, Naphthalintetracarbonsäuredianhydrid, Benzophenon-3,3',4,4'-tetracarbonsäuredianhydrid, 4,4'-Oxydiphtalsäuredianhydrid, Decahydronaphthalin-1,4,5,8-tetracarbonsäuredianhydrid, 4,8-Dimethyl-1,2,3,5,6,7-hexahydronaphthalin-1,2,5,6-tetracarbonsäuredianhydrid, 2,6-Dichlor-naphthalin-1,4,5,8-tetracarbonsäuredianhydrid, 2,7-Dichlornaphthalin-1,4,5,8-tetracarbonsäuredianhydrid, 2,3,6,7-Tetrachlornaphthalin-1,4,5,8-tetracarbonsäuredianhydrid, Phenanthren-1,3,9,10-tetracarbonsäuredianhydrid, Perylen-3,4,9,10-tetracarbonsäuredianhydrid, Bis(2,3-dicarboxyphenyl)methandianhydrid, Bis(3,4-dicarboxyphenyl)methandianhydrid, 1,1-Bis(2,3-dicarboxyphenyl)äthandianhydrid, 1,1-Bis(3,4-dicarboxyphenyl)äthandianhydrid, 2,2-Bis(2,3-dicarboxyphenyl)propandianhydrid, 2,3-Bis(3,4-dicarboxyphenyl)propandianhydrid, Bis(3,4-dicarboxyphenyl)sulfondianhydrid, Bis(3,4-dicarboxyphenyl)ätherdianhydrid, Äthylentetracarbonsäuredianhydrid, Butan-1,2,3,4-tetracarbonsäuredianhydrid, Cyclopentan-1,2,3,4-tetracarbonsäuredianhydrid, Pyrrolidin-2,3,4,5-tetracarbonsäuredianhydrid, Pyrazin-2,3,5,6-tetracarbonsäuredianhydrid und Thiophen-2,3,4,5-tetracarbonsäuredianhydrid.

Als organische Diisocyanate eignen sich insbesondere 2,4-Toluylendiisocyanat, 2,6-Toluylendiisocyanat, 4,4'-Methylenbis(phenylisocyanat), Dianisidindiisocyanat, Tolidindiisocyanat, Hexamethylendiisocyanat, 4,4'-Methylenbis(cyclohexylisocyanat), m-Xyloldiisocyanat, 1,5-Naphthalindiisocyanat, 1,4-Diäthylbenzol-ββ'-diisocyanat.

Nach dem erfindungsgemäßen Verfahren können auch Mischungen mehrerer Dianhydride mit Mischungen mehrerer Diisocyanate zu Polyimiden umgesetzt werden.

Als aprotische Lösungsmittel kommen in erster Linie dipolare Lösungsmittel, wie DMF, Dimethylacetamid, Dimethylsulfoxid, N-Methyl-2-pyrrolidon und Tetrahydrofuran in Frage. Das erfindungsgemäße Verfahren kann aber auch in Benzol, Toluol oder Xylol ausgeführt werden.

An der inhärenten Viskosität der fertigen Polykondensationslösung zeigt sich, daß die erfindungsgemäße Verwendung eines Alkalimetallhydroxides als Polymerisationsbeschleuniger zu Polyimiden mit einem höheren Molekulargewicht führt, als es bei Verwendung von Alkalimetallalkoholaten erreicht wird.

Das Alkalimetallhydroxid kann entweder in fester Form oder zweckmäßigerweise in Form einer wässerigen Lösung der Reaktionsmischung zugegeben werden.

Nach einer bevorzugten Ausführungsform des erfindungsgemäßen Verfahrens wird zur Herstellung von Polyimiden mit Struktureinheiten der allgemeinen Formel 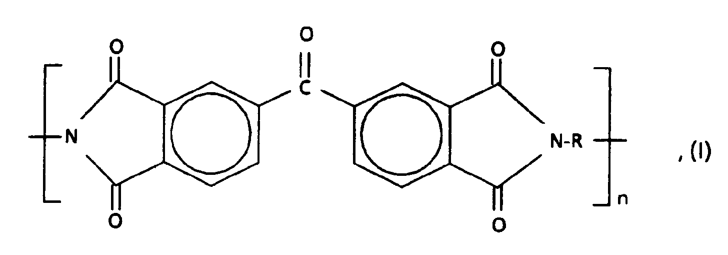
worin R die Gruppe 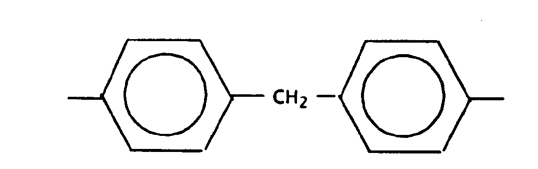
und/oder die Gruppe(n) 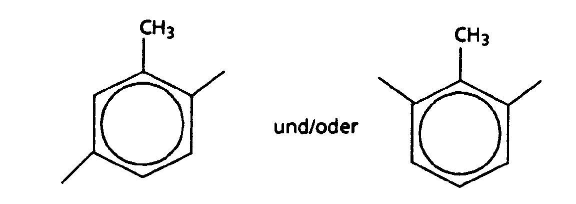
bedeutet und n für eine ganze Zahl größer 1 steht, eine Lösung von Benzophenontetracarbonsäuredianhydrid und 4,4'-Methylenbis (phenylisocyanat) und/oder 2,4- und/oder 2,6-Toluylendiisocyanat, in einem dipolaren, aprotischen Lösungsmittel erhitzt, wobei als Alkalimetallhydroxid Natriumhydroxid eingesetzt wird.

Als Lösungsmittel eignen sich DMF und N-Methyl-2-pyrrolidon besonders gut.

Das erfindungsgemäße Verfahren kann besonders schonend bei einer Temperatur von maximal 100°C, bevorzugt zwischen 60°C und 80°C durchgeführt werden, wobei pro Mol Diisocyanat zwischen 0,0001 und 0,2 Mol Alkalihydroxid, bevorzugt zwischen 0,01 Mol und 0,05 Mol Alkalihydroxid, und pro Mol Tetracarbonsäuredianhydrid zwischen 0,97 Mol und 1,01 Mol Diisocyanat eingesetzt werden.

Das Fortschreiten des erfindungsgemäßen Verfahrens läßt sich mit üblichen Analysenverfahren, beispielsweise durch IR-Spektralanalyse (Abwesenheit einer Absorption entsprechend der freien NCO-Gruppe) verfolgen. Da während der Reaktion CO₂ abgespalten wird, zeigt das Aufhören der CO₂-Entwicklung das Ende der Polykondensation an. Das Reaktionsprodukt kann durch Verdampfen des Lösungsmittels oder Ausfällen isoliert werden, oder es kann die Lösung direkt weiterverarbeitet werden.
Die erhaltenen Polyimide können zur Herstellung von hochtemperaturbeständigen Fasern, Formkörpern und Beschichtungen verwendet werden.

Es hat sich gezeigt, daß sich mit Alkalimetallhydroxiden nicht nur die Bildung von Polyimiden, sondern auch von Mono- und Diimiden aus den entsprechenden Ausgangsverbindungen katalysieren läßt. Derartige Imide sind bekannt. Nach der US-A-3,701,756 kann beispielsweise N-Phenylphthalimid durch Umsetzung von Phthalsäureanhydrid und Phenylisocyanat in Gegenwart von Phenylquecksilberhydroxid hergestellt werden. Die Reaktion wird bei erhöhter Temperatur in Benzol ausgeführt.

Die Erfindung betrifft deshalb auch ein Verfahren zur Herstellung von Mono- oder Diimiden durch Umsetzung von intramolekularen Dicarbonsäureanhydriden mit organischen Mono- oder Diisocyanaten oder durch Umsetzung von intramolekularen Tetracarbonsäuredianhydriden mit organischen Monoisocyanaten, das dadurch gekennzeichnet ist, daß die Umsetzung bei einer Temperatur von maximal 100°C in einem dipolaren, aprotischen Lösungsmittel in Gegenwart eines Alkalimetallhydroxides in einer Menge zwischen 0,0001 und 0,2 Mol pro Mol Mono- bzw. Diisocyanat durchgeführt wird, und daß pro Mol Dicarbonsäureanhydrid bzw. Tetracarbonsäuredianhydrid zwischen 0,97 Mol und 1,01 Mol Mono- bzw. Diisocyanat eingesetzt werden.

Als intramolekulare Dicarbonsäureanhydride eignen sich insbesondere Phthalsäureanhydrid, Bernsteinsäureanhydrid, Adipinsäureanhydrid, Glutarsäureanhydrid, Citraconsäureanhydrid, Maleinsäureanhydrid, Itaconsäureanhydrid, Naphthalin-1,2-dicarbonsäureanhydrid, Naphthalin-1,8-dicarbonsäureanhydrid, Chlorendicsäureanhydrid und 1,2,3,6-Tetrahydrophthalsäureanhydrid.

Als Diisocyanate und Tetracarbonsäureanhydride kommen die weiter oben genannten in Betracht und als Monoisocyanate insbesondere Phenylisocyanat, p-Toluylisocyanat, o-Toluylisocyanat, m-Xylylisocyanat, α-Naphthylisocyanat, Octadecylisocyanat, Benzylisocyanat, Allylisocyanat, Cyclohexylisocyanat und p-Nitrophenylisocyanat.

Eine bevorzugte Variante des erfindungsgemäßen Verfahrens zur Herstellung von Mono- bzw. Diimiden ist durch die weiteren Merkmale gekennzeichnet, daß
- es bei einer Temperatur zwischen 60°C und 80°C durchgeführt wird, und daß
- pro Mol Mono- bzw. Diisocyanat zwischen 0,01 Mol und 0,005 Mol Alkalimetallhydroxid eingesetzt werden.

Monoimide werden als Fungizide, Insektizide und Herbizide verwendet.

Die Erfindung wird mit den folgenden Beispielen noch näher erläutert.

### Beispiel 1:

Eine Mischung aus 5,92 g (0,04 mol) Phthalsäureanhydrid, 4,76 g (0,04 mol) Phenylisocyanat und 0,02 mg (0,005 mol) NaOH, gelöst in einem Tropfen Wasser, wurde in 40 ml trockenem Dimethylformamid 3,5 Stunden bei 100°C gerührt. Nach beendetem Erhitzen wurde das Reaktionsgemisch auf Raumtemperatur abgekühlt, worauf der hierbei ausgefallene Feststoff abfiltriert, mit Hexan gewaschen und getrocknet wurde. Ausbeute: 7,54 g N-Phenylphthalimid (= 85,1 %) in Form weißer Kristalle.

Zum Vergleich wurde die Umsetzung ohne Katalysator durchgeführt, wobei in nur 56,1 %iger Ausbeute 4,99 g N-Phenylphthalimid erhalten wurden.

Mit Dimethylphospholenoxid als Katalysator wurde in Xylol in 59,1 %iger Ausbeute N-Phenylphthalimid erhalten.

### Beispiel 2:

Eine Mischung aus 8,72 g (0,04 mol) Pyromellithsäuredianhydrid, 6,97 g (0,04 mol) 2,4-Toluylendiisocyanat und 0,02 mg (0,0005 mol) NaOH, gelöst in einem Tropfen Wasser, wurde in 40 ml trockenem Dimethylformamid 3,5 Stunden bei 100°C gerührt. Nach beendetem Erhitzen wurde der ausgefallene gelbe Niederschlag filtriert, gewaschen und getrocknet. Ausbeute an Polytoluylenpyromellithsäureimid: 99,2 %. Im Vergleich dazu betrug die Ausbeute der ohne Katalysator durchgeführten Umsetzung nur 90,1 %.

### Beispiel 3:

In einem 1000 ml Kolben mit Rührer, Rückflußkühler, Thermometer und Stickstoffkühlung wurden 161 g (0,5 mol) Benzophenon-3,3',4,4'-tetracarbonsäuredianhydrid und 0,15 g (0,0037 mol) Natronlauge, gelöst in 0,4 ml Wasser, in 496 g trockenem DMF gelöst. Die Reaktionsmischung wurde auf 80°C erwärmt, und unter konstantem Rühren unter Stickstoffatmosphäre wurden innerhalb von sechs Stunden 94,7 g (0,5 mol) Isocyanatgemisch, bestehend aus 69,7 g (0,4 mol) 2,4-Toluylendiisocyanat und 25 g (0,1 mol) 4,4'-Methylenbis (phenylisocyanat) zugetropft. Die Polykondensationslösung wurde danach bis zur Beendigung der CO₂-Entwicklung eine Stunde bei 80°C weitergerührt. Im IR-Spektrum waren dann keine freien Anhydridgruppen mehr sichtbar, wodurch sich eine Zugabe von weiterem Diisocyanat erübrigte.

Die fertige Polykondensationslösung hatte eine inhärente Viskosität (c = 0,5 g/dl bei 25°C in DMF/1 % LiBr) von 66 ml/g. Durch Zugabe von Aceton wurde das Polyimid ausgefällt, der Niederschlag abfiltriert, gewaschen und getrocknet. Die Glasübergangstemperatur des gewonnenen Pulvers lag bei 315°C.

### Vergleich zu Beispiel 3:

Nach dem in Beispiel 3 geschilderten Verfahren und unter Verwendung identischer Einsatzmengen mit der Ausnahme, daß anstatt Natronlauge 0,2 g (0,0037 mol) Natriummethylat in fester Form zugegeben wurden, wurde dieselbe Umsetzung durchgeführt. Nach sieben Stunden Reaktionszeit konnten noch freie Anhydridgruppen im IR-Spektrum nachgewiesen werden. Es wurden daher innerhalb von zwei Stunden noch weitere 0,95 g Isocyanatgemisch, bestehend aus 0,25 g (0,001 mol) MDI und 0,70 g (0,004 mol) TDI, zugetropft. Dies entspricht einem Isocyanatüberschuß von 1 Mol%.

Die fertige Polykondensationslösung hatte eine inhärente Viskosität (c = 0,5g/dl bei 25°C in DMF/1 % LiBr) von nur 64 ml/g. Das analog zum Beispiel 3 ausgefällte Pulver hatte eine Glasübergangstemperatur von 315°C.

### Beispiel 4:

In einem Reaktor aus Edelstahl mit Rührer, Rückflußkühler, Thermofühler und Stickstoffspülung wurden 5928 g (18,4 mol) Benzophenon-3,3',4,4'-tetracarbonsäuredianhydrid und 7,4 g (0,184 mol) Natronlauge, gelöst in 15 ml Wasser, in 23350 g trockenem DMF gelöst. Die Reaktionsmischung wurde auf 80°C erwärmt, und unter konstantem Rühren wurden unter Stickstoffatmosphäre 3485 g (18,4 mol) Isocyanatgemisch, bestehend aus 2564 g (14,72 mol) 2,4-Toluylendiisocyanat und 921 g (3,68 mol) 4,4'-Methylenbis (phenylisocyanat) innerhalb von sechs Stunden zugetropft. Die Zunahme der Viskosität wurde über ein In-line-Viskosimeter verfolgt. Bereits bei 98 %iger Zugabe der gesamten Isocyanatmenge begann die Viskosität der Polykondensationslösung zu steigen. Nach Zugabe der gesamten Isocyanatmenge wurde bis zur Beendigung der CO₂-Entwicklung eine Stunde bei 80°C weitergerührt. Im IR-Spektrum waren keine freien Anhydrid- und Isocyanatgruppen mehr zu sehen.

Die fertige Polykondensationslösung hatte eine inhärente Viskosität (c = 0,5 g/dl bei 25°C in DMF/1 % LiBr) von 57 bis 66 ml/g. Die gesamte Reaktionszeit betrug sieben Stunden.

### Vergleich zu Beispiel 4:

Nach dem in Beispiel 4 geschilderten Verfahren und unter Verwendung identischer Einsatzmengen mit der Ausnahme, daß anstatt Natronlauge 9,9 g (0,184 mol) Natriummethylat in fester Form zugegeben wurden, wurde dieselbe Reaktion durchgeführt. Nach Zugabe der gesamten Isocyanatmenge war noch kein Viskositätsanstieg am In-line-Viskosimeter zu beobachten. Nach sieben Stunden Reaktionszeit konnten noch freie Anhydridgruppen im IR-Spektrum nachgewiesen werden. Es wurden daher innerhalb von zwei Stunden weitere 52,3 g (0,276 mol) Isocyanatgemisch zugetropft. Dies entspricht einem Isocyanatüberschuß von 1,5 Mol%. Erst danach begann die Viskosität der Polykondensationslösung zu steigen. Bis zur Beendigung der CO₂-Entwicklung bzw. der Beendigung des Viskositätsanstieges wurde noch eine Stunde bei 80°C gerührt. Im IR-Spektrum wurden dann keine freien Anhydrid- bzw. Isocyanatgruppen mehr nachgewiesen.

Die fertige Polykondensationslösung hatte eine inhärente Viskosität (c = 0,5g/dl bei 25°C in DMF/1 % LiBr) von nur 46 bis 55 ml/g. Die gesamte Reaktionszeit betrug neun Stunden.

## Patentansprüche

1. Verfahren zur Herstellung von Polyimiden durch Erhitzen einer Lösung von intramolekularen Tetracarbonsäuredianhydriden und organischen Diisocyanaten in einem aprotischen organischen Lösungsmittel in Gegenwart eines Polymerisationsbeschleunigers, dadurch gekennzeichnet, daß als Polymerisationsbeschleuniger ein Alkalimetallhydroxid in einer Menge zwischen 0,0001 und 0,2 Mol pro Mol Diisocyanat eingesetzt wird.

2. Verfahren nach Anspruch 1, dadurch gekennzeichnet, daß das Alkalimetallhydroxid in Form einer wässerigen Lösung eingesetzt wird.

3. Verfahren nach Anspruch 1 oder 2 zur Herstellung von Polyimiden mit Struktureinheiten der allgemeinen Formel 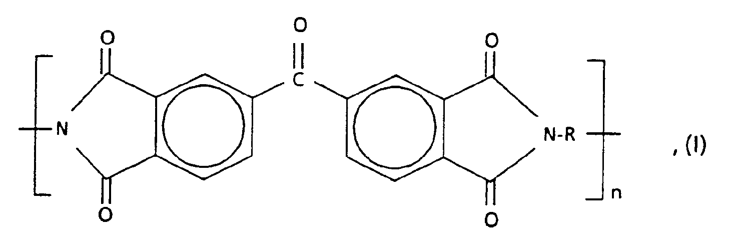 worin R die Gruppe 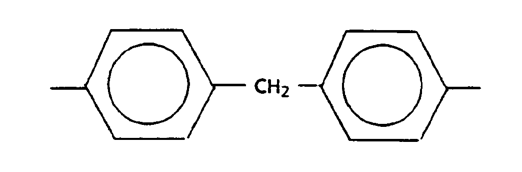 und/oder die Gruppe(n) 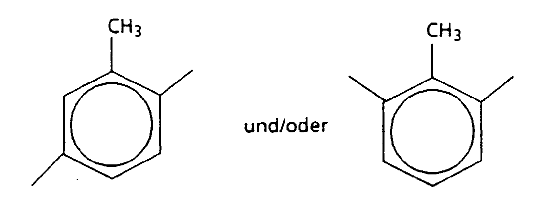 bedeutet und n für eine ganze Zahl größer 1 steht, durch Erhitzen einer Lösung von Benzophenontetracarbonsäuredianhydrid und 4,4'-Methylenbis(phenylisocyanat) und/oder 2,4- und/oder 2,6-Toluylendiisocyanat, in einem dipolaren, aprotischen Lösungsmittel, dadurch gekennzeichnet, daß als Alkalimetallhydroxid Natriumhydroxid eingesetzt wird.

4. Verfahren nach einem oder mehreren der Ansprüche 1 bis 3, gekennzeichnet durch die weiteren Merkmale, daß
- es bei einer Temperatur von maximal 100°C, bevorzugt zwischen 60°C und 80°C durchgeführt wird, daß
- pro Mol Diisocyanat zwischen 0,01 Mol und 0,05 Mol Alkalimetallhydroxid, eingesetzt werden, und daß
- pro Mol Tetracarbonsäuredianhydrid zwischen 0,97 Mol und 1,01 Mol Diisocyanat eingesetzt werden.

5. Verfahren zur Herstellung von Mono- oder Diimiden durch Umsetzung von intramolekularen Dicarbonsäureanhydriden mit organischen Mono- oder Diisocyanaten oder durch Umsetzung von intramolekularen Tetracarbonsäuredianhydriden mit organischen Monoisocyanaten, dadurch gekennzeichnet, daß die Umsetzung bei einer Temperatur von maximal 100°C in einem dipolaren, aprotischen Lösungsmittel in Gegenwart eines Alkalimetallhydroxides in einer Menge zwischen 0,0001 und 0,2 Mol pro Mol Mono- bzw. Diisocyanat durchgeführt wird, und daß pro Mol Dicarbonsäureanhydrid bzw. Tetracarbonsäuredianhydrid zwischen 0,97 Mol und 1,01 Mol Mono- bzw. Diisocyanat eingesetzt werden.

6. Verfahren nach Anspruch 5, gekennzeichnet durch die weiteren Merkmale, daß
- es bei einer Temperatur zwischen 60°C und 80°C durchgeführt wird, und daß
- pro Mol Mono- bzw. Diisocyanat zwischen 0,01 Mol und 0,005 Mol Alkalimetallhydroxid eingesetzt werden.

## Claims

1. Process for the preparation of polyimides by heating a solution of intramolecular tetracarboxylic acid dianhydrides and organic diisocyanates in an aprotic organic solvent in the presence of a polymerisation accelerator, characterised in that, an alkali metal hydroxide in an amount between 0.0001 and 0.2 mol per mol of diisocyanate is used as the polymerisation accelerator.

2. Process in accordance with Claim 1, characterised in that, the alkali metal hydroxide is used in the form of an aqueous solution.

3. Process in accordance with Claims 1 or 2 for the preparation of polyimides with structural units of the general formula 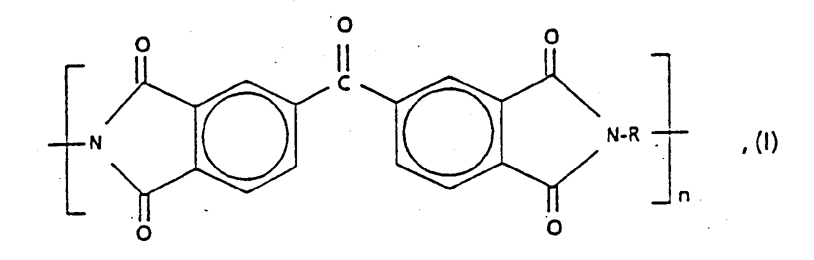 where R is the group 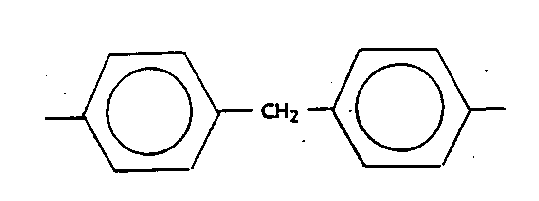 and/or the group(s) 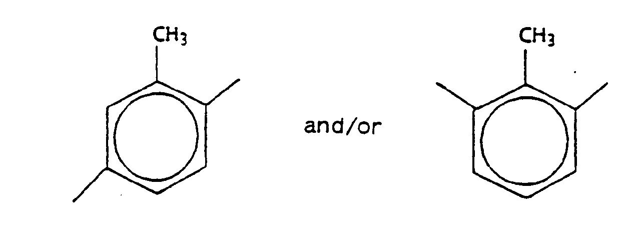 and where n stands for an integer greater than 1, by heating a solution of benzophenone tetracarboxylic acid dianhydrlde and 4,4'-methylenebis(phenylisocyanate) and/or 2,4- and/or 2,6-toluylene diisocyanate in a dipolar aprotic solvent, characterised in that, sodium hydroxide is used as the alkali metal hydroxide.

4. Process in accordance with one or more of the Claims 1 to 3, characterised by the further features, that
- it is carried out at a maximum temperature of 100 °C, preferably between 60 °C and 80 °C, and that
- between 0.01 mol and 0.05 mol of alkali metal hydroxide is used per mol of diisocyanate, and that
- between 0.97 mol and 1.01 mol of diisocyanate is used per mol of tetracarboxylic acid dianhydride.

5. Process for the preparation of monoimides or diimides by the reaction of intramolecular dicarboxylic acid anhydrides with organic monoisocyanates or diisocyanates, or by the reaction of intramolecular tetracarboxylic acid dianhydrides with organic monoisocyanates, characterised in that, the reaction is carried out at a maximum temperature of 100 °C in a dipolar aprotic solvent in the presence of an alkali metal hydroxide in an amount between 0.0001 and 0.2 mol per mol of monoisocyanate or diisocyanate respectively, and that between 0.97 mol and 1.01 mol of monoisocyanate or diisocyanate respectively is used per mol of dicarboxylic acid anhydride or tetracarboxylic acid dianhydride respectively.

6. Process in accordance with Claim 5, characterised by the further features that
- it is carried out at a temperature between 60 °C and 80 °C, and that
- between 0.01 mol and 0.005 mol alkali metal hydroxide is used per mol monoisocyanate or diisocyanate respectively.

## Revendications

1. Procédé de préparation de polyimides par chauffage d'une solution de dianhydrides tétracarboxyliques intramoléculaires et de diisocyanates organiques dans un solvant aprotique organique en présence d'un activateur de polymérisation, caractérisé en ce qu'on utilise comme activateur de polymérisation un hydroxyde de métal alcalin en une quantité comprise entre 0,0001 et 0,2 mol par mole de diisocyanate.

2. Procédé selon la revendication 1, caractérisé en ce qu'on utilise l'hydroxyde de métal alcalin sous forme d'une solution aqueuse.

3. Procédé selon la revendication 1 ou 2 pour la préparation de polyimides ayant un motif récurrent de formule générale 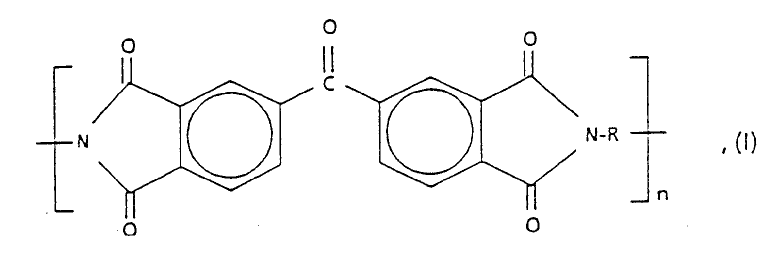 dans laquelle R représente le groupe 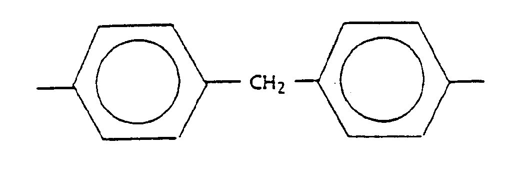 et/ou le(s) groupe(s) 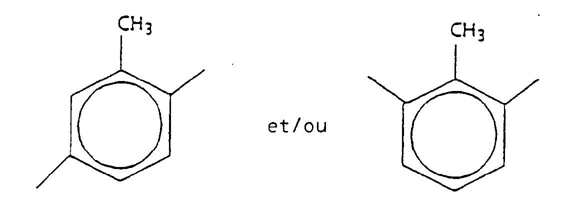 et n représente un nombre entier supérieur à 1, par chauffage d'une solution de dianhydride benzophénonetétracarboxylique et de 4,4'-méthylènebis(phénylisocyanate) et/ou de 2,4- et/ou de 2,6-toluylènediisocyanate, dans un solvant aprotique dipolaire, caractérisé en ce que l'on utilise comme hydroxyde de métal alcalin l'hydroxyde de sodium.

4. Procédé selon l'une ou plusieurs des revendications 1 à 3, caractérisé par les particularités suivantes:
- il est effectué à une température d'au plus 100°C, de préférence de 60°C à 80°C,
- on utilise entre 0,01 et 0,05 mol d'hydroxyde de métal alcalin par mole de diisocyanate,
- on utilise entre 0,97 et 1,01 mol de diisocyanate par mole de dianhydride tétracarboxylique.

5. Procédé de préparation de mono- ou de diimides par réaction d'anhydrides dicarboxyliques avec des mono- ou diisocyanates organiques ou par réaction de dianhydrides tétracarboxyliques intramoléculaires avec des monoisocyanates organiques, caractérisé en ce que la réaction est mise en oeuvre à une température d'au plus 100°C dans un solvant aprotique dipolaire en présence d'un hydroxyde de métal alcalin présent en une quantité comprise entre 0,0001 et 0,2 mol par mole de mono-, respectivement diisocyanate et que l'on utilise de 0,97 à 1,01 mol de mono-, respectivement diisocyanate par mole d'anhydride dicarboxylique respectivement de dianhydride tétracarboxylique.

6. Procédé selon la revendication 5, caractérisé par les particularités suivantes:
- il est mis en oeuvre à une température comprise entre 60°C et 80°C, et
- on utilise entre 0,01 et 0,005 mol d'hydroxyde de métal alcalin par mole de mono-, respectivement diisocyanate.
